# EUROPEAN PATENT SPECIFICATION

(11) **EP 4 506 838 B1**
(45) Date of publication and mention of the grant of the patent: **27.05.2026**
(21) Application number: 24190995.1
(22) Date of filing: 25.07.2024
(51) Int. Cl.: G06F 21/32, H04L 9/40, G06N 3/00, G10L 15/12, G10L 17/08, G06N 3/045, G06F 17/14, G06N 3/08, G10L 17/26, G10L 17/24, G06F 17/16, G06N 7/01, G06N 20/10

(54) **METHODS AND SYSTEMS FOR AUTHENTICATING USERS**
VERFAHREN UND SYSTEME ZUR AUTHENTIFIZIERUNG VON BENUTZERN
PROCÉDÉS ET SYSTÈMES D'AUTHENTIFICATION D'UTILISATEURS

(30) Priority: 05.08.2023 US 202318365974
(43) Date of publication of application: 12.02.2025
(73) Proprietor: Daon Technology, Dublin 1 Dublin (IE)
(72) Inventor: BLOUET, Raphael, Talence (FR); MANTECON, Ana, Madrid (ES); GRIOT, Nathan, Avignon (FR); MATROUF, Driss, Montfavet (FR); BONASTRE, Jean-Francois, Velleron (FR)
(74) Representative: Murgitroyd & Company

(56) References cited:
- DE-A1- 102021 205 970
- US-A1- 2018 146 370
- US-A1- 2022 270 611
- US-A1- 2022 392 456
- US-A1- 2023 153 815

## Description

### BACKGROUND OF THE INVENTION

This invention relates generally to biometric authentication transactions, and more particularly, to methods and systems for authenticating users.

Users are required to prove who they claim to be during authentication transactions conducted under many different circumstances. For example, users may be required to prove their identity when contacting a call center or a merchant while attempting to remotely purchase a product from a merchant system over the Internet. Claims of identity may be proven during authentication transactions based on audio data captured from the user. During authentication transactions based on audio data users speak or utter a phrase. The uttered phrase, or utterance, is a speech signal. User authentication based on audio data relies on the analysis of such speech signals.

Text-Dependent Automatic Speaker Verification (TD-ASV) is a known process of verifying the identity of a person based on audio data in which the user is asked to utter a passphrase whose linguistic content (i.e. sequence of word) is defined during the enrolment phase.

Universal Text Dependent Automatic Speaker Verification (UTD-SV) is a known process of verifying the identity of a person based on audio data in which the user is permitted to define his or her own secret passphrase.

Text Dependent Automatic Speaker Verification (TD-ASV) systems that allow users to define their own secret passphrase use a Text Independent Automatic Speaker Verification (TI-ASV) system to authenticate the user's identity and an Automatic Speech Recognition (ASR) system to authenticate linguistic content embedded within the secret passphrase. Training and maintaining both the TD-ASV and ASR systems is time consuming and expensive. Additionally, authenticating linguistic content spoken in different languages requires training and maintaining a different ASR system for each different language which compounds training and maintenance time and costs.

Known TI-ASV systems generally do not explicitly consider the temporal sequence of acoustic events, or phonemes, embedded within the secret passphrase chosen by the user. The user identification function that occurs within current TI-ASV systems uses a frame pooling layer that merges frame level information vectors into one unique utterance level vector. Pooling layers can be implemented by calculating the mean and covariance of the frame level vectors present in the utterance, which converts to losing any dynamic information contained in the activation sequence. Additionally, an attention mechanism integrated in the TI-ASV system loses information contained in an activations sequence while the mean and covariance of a weighted activation sequence are computed. However, the accuracy of the authentication results generated using TI-ASV systems for UTD-SV is less than desired and the length of time required to generate the results is longer than desired.

US 2022/0392456 describes a method and apparatus for authenticating a user based on an utterance input includes obtaining an input audio signal based on the utterance input of the user; obtaining, from the input audio signal, at least one audio signal of an utterance section and at least one audio signal of a non-utterance section; generating environment information indicating an environment in which the utterance input is received, based on the at least one audio signal of the non-utterance section; obtaining a result of a comparison between the generated environment information and registration environment information indicating an environment in which a registration utterance input corresponding to a previously registered registration audio signal corresponding to the user is received; adjusting an authentication criterion for authenticating the user based on the result of the comparison; and authenticating the user based on the adjusted authentication criterion and the input audio signal.

Thus, it would be advantageous and an improvement over the relevant technology to provide a method, a computer, and a computer-readable recording medium capable of explicitly considering the temporal sequence of acoustic events to simultaneously validate speaker identities and the linguistic content of the utterances while facilitating a reduction in training and maintenance time and costs and facilitating quickly generating more accurate verification transaction results.

### BRIEF DESCRIPTION OF THE INVENTION

An aspect of the present disclosure provides a method for authenticating users as detailed in claim 1. Advantageous features are in the dependent claims.
There is also provided an electronic device, and a computer program as detailed in the claims that follow.

### BRIEF DESCRIPTION OF THE DRAWINGS

Figure 1 is a schematic diagram of an example computing system for authenticating users according to an embodiment of the present disclosure;
Figure 2 is a more detailed schematic diagram illustrating an electronic device in the system of Figure 1;
Figure 3 is a diagram illustrating an example audio signal captured by the electronic device 10 while a user spoke a phrase;
Figure 4 is a diagram illustrating an example audio signal captured by the electronic device while a user spoke his or her secret passphrase during an authentication transaction;
Figure 5 is a diagram illustrating example corresponding utterance data between the example signals shown in Figures 3 and 4;
Figure 6 is a diagram illustrating an example first activation sequence;
Figure 7 is a diagram illustrating an example second activation sequence;
Figure 8 is a diagram illustrating an example matrix;
Figure 9 is a diagram illustrating an example graph in which distances and minimum distances between corresponding vectors in the first and second sequences are plotted; and
Figure 10 is a flowchart illustrating an example method and algorithm for authenticating users.

### DETAILED DESCRIPTION OF THE INVENTION

The following detailed description is made with reference to the accompanying drawings and is provided to assist in a comprehensive understanding of various example embodiments of the present disclosure. The following description includes various details to assist in that understanding, but these are to be regarded merely as examples The words and phrases used in the following description are merely used to enable a clear and consistent understanding of the present disclosure. In addition, descriptions of well-known structures, functions, and configurations may have been omitted for clarity and conciseness.

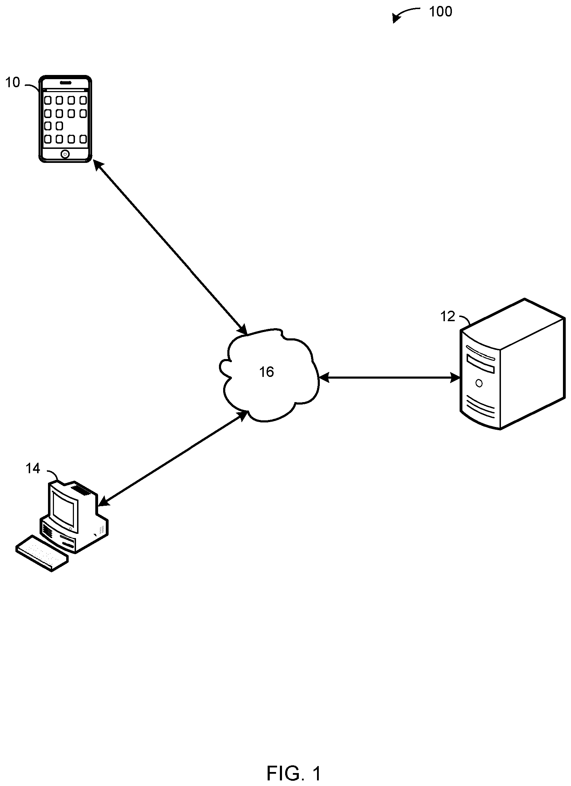

Figure 1 is a schematic diagram of an example computing system 100 for authenticating users according to an embodiment of the present disclosure. As shown in Fig. 1, the main elements of the system 100 include an electronic device 10, a server 12, and a computer 14 communicatively connected via a network 16.

In Figure 1, the electronic device 10 can be any wireless hand-held consumer computing device capable of at least downloading applications over the Internet, running applications, capturing and storing data temporarily and/or permanently, and otherwise performing any and all functions described herein by any computer, computer system, server or computing device included in the system 100. One example of the electronic device 10 is a smart phone. Other examples include, but are not limited to, a cellular phone, a tablet computer, a phablet computer, a laptop computer, and any type of hand-held consumer computing device having wired or wireless networking capabilities capable of performing the functions, methods, and/or algorithms described herein.

The electronic device 10 is typically associated with a single person who operates the device. The person who is associated with and operates the electronic device 10, as well as speaks during enrollment and/or during an authentication transaction is referred to herein as a user.

The server 12 can be, for example, any type of server or computer implemented as a network server or network computer.

The computer 14 can be, for example, a personal computer (PC). Other examples include, but are not limited to, a cellular phone, a tablet computer, a phablet computer, a laptop computer, and any type of hand-held consumer computing device having wired or wireless networking capabilities capable of performing the functions, methods, and/or algorithms described herein. The electronic device 10, server 12, and computer 14 are electronic devices so may alternatively be referred to as such. Additionally, the electronic device 10, the server 12, and the computer 14 may each alternatively be referred to as an information system.

The network 16 may be implemented as a 5G communications network. Alternatively, the network 16 may be implemented as any wireless network including, but not limited to, 4G, 3G, Wi-Fi, Global System for Mobile (GSM), Enhanced Data for GSM Evolution (EDGE), and any combination of a LAN, a wide area network (WAN) and the Internet. The network 16 may also be any type of wired network or a combination of wired and wireless networks.

It is contemplated by the present disclosure that the number of computing devices 10, servers 12, and computers 14 is not limited to the number of computing devices 10, servers 12, and computers 14 shown in the system 100. Rather, any number of computing devices 10, servers 12, and computers 14 may be included in the system 100.

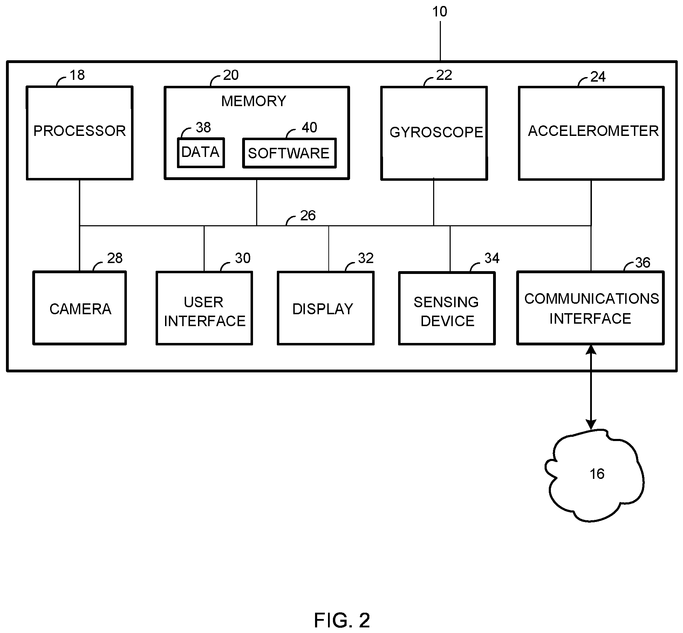

Figure 2 is a more detailed schematic diagram illustrating the electronic device 10. The electronic device 10 includes components such as, but not limited to, one or more processors 18, a memory 20, a gyroscope 22, an accelerometer 24, a bus 26, a camera 28, a user interface 30, a display 32, a sensing device 34, and a communications interface 36. General communication between the components in the electronic device 10 is provided via the bus 26.

The processor 18 executes software instructions, or computer programs, stored in the memory 20. As used herein, the term processor is not limited to just those integrated circuits referred to in the art as a processor, but broadly refers to a computer, a microcontroller, a microcomputer, a programmable logic controller, an application specific integrated circuit, and any other programmable circuit capable of executing at least a portion of the functions and/or methods described herein. The above examples are not intended to limit in any way the definition and/or meaning of the term "processor."

The memory 20 may be any non-transitory computer-readable recording medium. Non-transitory computer-readable recording media may be any tangible computer-based device implemented in any method or technology for short-term and long-term storage of information or data. Moreover, the non-transitory computer-readable recording media may be implemented using any appropriate combination of alterable, volatile or non-volatile memory or non-alterable, or fixed, memory. The alterable memory, whether volatile or non-volatile, can be implemented using any one or more of static or dynamic RAM (Random Access Memory), a floppy disc and disc drive, a writeable or re-writeable optical disc and disc drive, a hard drive, flash memory or the like. Similarly, the non-alterable or fixed memory can be implemented using any one or more of ROM (Read-Only Memory), PROM (Programmable Read-Only Memory), EPROM (Erasable Programmable Read-Only Memory), EEPROM (Electrically Erasable Programmable Read-Only Memory), and disc drive or the like. Furthermore, the non-transitory computer-readable recording media may be implemented as smart cards, SIMs, any type of physical and/or virtual storage, or any other digital source such as a network or the Internet from which computer programs, applications or executable instructions can be read.

The memory 20 may be used to store any type of data 38, for example, data records of users. Each data record is typically for a respective user. The data record for each user may include data such as, but not limited to, the user's name, an identifier of the electronic device 10 associated with the user, passphrase identifiers, biometric modality data, biometric templates, features matrices, embeddings, and personal data. A biometric template can be any type of mathematical representation of biometric modality data and can be associated with a class of data. For example, a template can be any mathematical function of one or more embeddings. Biometric modality data is the data of a biometric modality of a person. For the methods and systems described herein, the biometric modality is voice.

Embeddings are vectors whose coefficients enable efficiently characterizing speakers. That is, the speaker embeddings are mathematical representations of the speaker that can be used to identify the speaker. Additionally, the embeddings can be used as an enrollment template.

Embeddings as described herein may include, for example, replay-detection specific information and are capable of including information about the identity of a speaker. Embeddings enable conducting an authentication transaction based on audio data using one model only. Embeddings are a mathematical representation of a matrix so may be expressed as *f(x*). The matrices and embeddings extracted therefrom may be stored in the computing device 10.

Voice biometric data may be captured by the electronic device 10 by recording a user speaking a phrase. The phrase may be secret. Captured voice biometric data may be temporarily or permanently stored in the electronic device 10 or in any device capable of communicating with the electronic device 10 via the network 16. Voice biometric data is captured as audio data. Audio signals are audio data. The audio data is stored as an audio data file. As used herein, capture means to record temporarily or permanently, any data including, for example, biometric modality data of a person.

The term "personal data" as used herein includes any demographic information regarding a user as well as contact information pertinent to the user. Such demographic information includes, but is not limited to, a user's name, age, date of birth, street address, email address, citizenship, marital status, and contact information. Contact information can include devices and methods for contacting the user.

Additionally, the memory 20 can be used to store any type of software 40. As used herein, the term "software" is intended to encompass an executable computer program that exists permanently or temporarily on any non-transitory computer-readable recordable medium that causes the electronic device 10 to perform at least a portion of the functions, methods, and/or algorithms described herein. Application programs are software and include, but are not limited to, operating systems, Internet browser applications, authentication applications, feature extraction computer programs, machine learning algorithms (MLA), machine learning models, and any other software and/or any type of instructions associated with algorithms, processes, or operations for controlling the general functions and operations of the electronic device 10. The software may also include computer programs that implement buffers and use RAM to store temporary data.

Authentication applications enable the electronic device 10 to conduct user verification and identification (1:C) transactions with any type of authentication data, where "C" is a number of candidates. Feature extraction computer programs process audio signals to generate a representative feature vector that contains information about the signal. Machine learning models have parameters which are modified during training to optimize functionality of the models trained using a machine learning algorithm (MLA). MLAs include at least classifiers and regressors. Example classifiers are Deep Neural Networks, Time Delay Neural Networks, Recurrent Neural Network and Residual Networks.

The process of verifying the identity of a user is known as a verification transaction. For verification transactions based on voice biometric data users may speak two phrases. One phrase is an identity verification phrase and the other is a liveness detection phrase.

During a verification transaction based on voice biometric data, a verification template is generated from a spoken identification verification phrase captured during the transaction. The verification template is compared against a corresponding recorded enrolment template of the user and a score is calculated for the comparison. The recorded enrolment template is created during enrolment of the user in an authentication system. If the calculated score is at least equal to a threshold score, the identity of the user is verified as true. Alternatively, the captured voice biometric data may be compared against the corresponding record voice biometric data to verify the identity of the user.

During verification transactions, the spoken identification verification phrase may be evaluated to verify it was spoken by a live person. For example, it is known to use an utterance and verify it was spoken by the user and contains a required phrase. This facilitates detecting replay attacks but not voice cloning and/or voice conversion attacks. This is inconvenient because users are required to speak a second phrase which is used to evaluate liveness of the user. It is also known to use a liveness detection computer system which requires processing captured biometric data by two systems but does not use user specific information in the liveness detection process.

The user interface 30 and the display 32 allow interaction between a user and the electronic device 10. The display 32 may include a visual display or monitor that displays information. For example, the display 32 may be a Liquid Crystal Display (LCD), an active matrix display, plasma display, or cathode ray tube (CRT). The user interface 30 may include a keypad, a keyboard, a mouse, an illuminator, a signal emitter, a microphone, and/or speakers.

Moreover, the user interface 30 and the display 32 may be integrated into a touch screen display. Accordingly, the display may also be used to show a graphical user interface, which can display various data and provide "forms" that include fields that allow for the entry of information by the user. Touching the screen at locations corresponding to the display of a graphical user interface allows the person to interact with the electronic device 10 to enter data, change settings, control functions, etc. Consequently, when the touch screen is touched, the user interface 30 communicates this change to the processor 18, and settings can be changed or user entered information can be captured and stored in the memory 20. The display 32 may function as an illumination source to apply illumination to an object while image data for the object is captured.

The sensing device 34 may include Radio Frequency Identification (RFID) components or systems for receiving information from other devices in the system 100 and for transmitting information to other devices in the system 100. The sensing device 34 may alternatively, or additionally, include components with Bluetooth, Near Field Communication (NFC), infrared, or other similar capabilities. Communications between the electronic device 10 of the user, the server 12, and the computer 14 may occur via NFC, RFID, Bluetooth or the like only so a network connection from the electronic device 10 is unnecessary.

The communications interface 36 may include various network cards, and circuitry implemented in software and/or hardware to enable wired and/or wireless communications with other electronic devices 10 (not shown), the server 12, and the computer 14 via the network 16. Communications include, for example, conducting cellular telephone calls and accessing the Internet over the network 16. By way of example, the communications interface 36 may be a digital subscriber line (DSL) card or modem, an integrated services digital network (ISDN) card, a cable modem, or a telephone modem to provide a data communication connection to a corresponding type of telephone line. As another example, the communications interface 36 may be a local area network (LAN) card (e.g., for Ethemet.TM. or an Asynchronous Transfer Model (ATM) network) to provide a data communication connection to a compatible LAN. As yet another example, the communications interface 36 may be a wire or a cable connecting the electronic device 10 with a LAN, or with accessories such as, but not limited to, other computing devices. Further, the communications interface 36 may include peripheral interface devices, such as a Universal Serial Bus (USB) interface, a PCMCIA (Personal Computer Memory Card International Association) interface, and the like.

The communications interface 36 also allows the exchange of information across the network 16. The exchange of information may involve the transmission of radio frequency (RF) signals through an antenna (not shown). Moreover, the exchange of information may be between the electronic device 10, the server 12, the computer 14, other electronic devices (not shown), and other computer systems (not shown) capable of communicating over the network 16.

Examples of other computer systems (not shown) include computer systems of service providers such as, but not limited to, financial institutions, medical facilities, national security agencies, merchants, and authenticators. The electronic devices (not shown) may be associated with any user or with any type of entity including, but not limited to, commercial and non-commercial entities.

The server 12 and the computer 14 may include the same or similar components as described herein with regard to the electronic device 10. The server 12 and computer 14 need not include all the same components described herein with regard to the electronic device 10. For example, the server 12 and the computer 14 may not include the gyroscope 22 and/or the accelerometer 24.

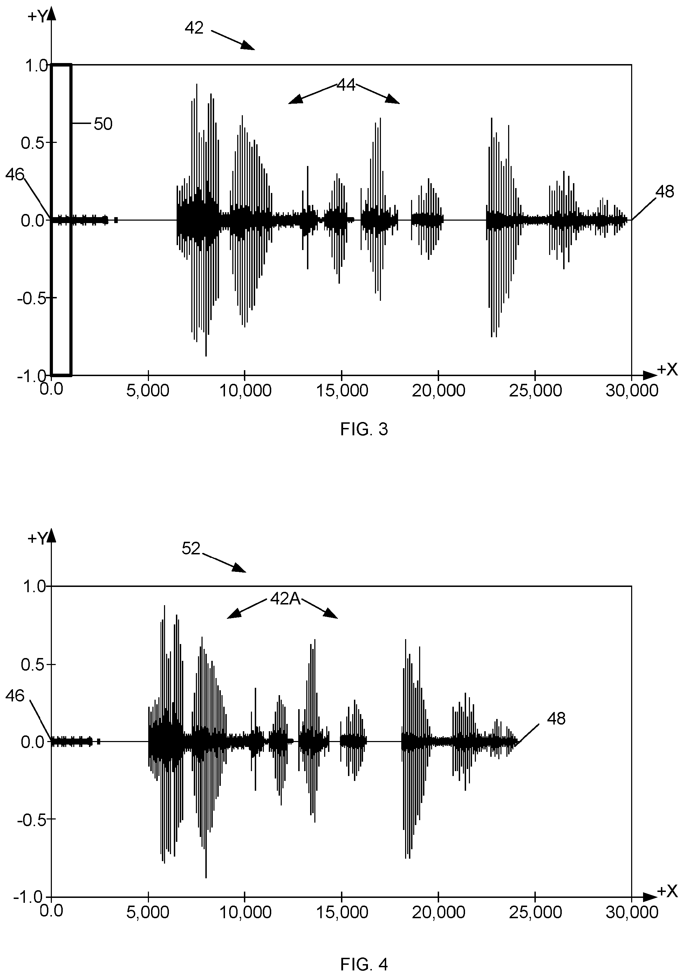

Figure 3 is a diagram 42 illustrating an example audio signal 44 captured by the electronic device 10 while a user spoke a phrase. The audio signal 44 may be captured by the electronic device 10 while it is operated by the user or another person. The audio signal 44 may be captured as a continuous analog signal and converted into an audio signal by sampling at any frequency within the range of 8 kHz and 96 kHz. The audio signal 44 may be provided in Pulse Code Modulation (PCM) in 8, 16, or 24 bits or in compressed format, for example, in flac, mp3, a-law, mu-law and amr, and may be filtered using a pre-emphasis filter that amplifies the high-frequency content of the data. The audio signal 44 is audio data that represents voice biometric data of the user and an audio production flag. The audio signal 44 may be stored in the data record of the user associated with the electronic device 10. The audio signal 44 and a template generated therefrom may be referred to as record audio data.

The audio signal 44 is plotted on a Cartesian coordinate system having X and Y-axes. The X-axis represents the number of discrete elements included in the captured audio signal 44 in which each discrete element is captured at a rate, in seconds, equal to the inverse of a sampling frequency. The Y-axis represents the normalized values of the discrete elements of the signal 44. Alternatively, the Y-axis may represent the actual values of the discrete elements in the signal 44. The audio signal 44 extends from the origin 46 to a terminus 48 and has a duration of about three (3) seconds. The duration of the audio signal 44 depends on the length of the spoken phrase which may also vary.

A temporal window 50 is located in an initial position flush with the origin 46 and has a duration of twenty-five (25) milliseconds. Alternatively, the temporal window 50 may be any duration that facilitates creating matrices from which embeddings can be extracted and used to generate accurate and trustworthy authentication results as described herein. The window 50 is translated in the positive direction along the X-axis over the duration of the signal 44 in ten (10) millisecond increments. Consequently, the temporal window 50 occupies many different positions over the signal 44. The 10-millisecond increment is the frame rate which may be any value that facilitates calculating signal features as described herein.

The window 50 can be implemented as a mathematical function that multiples the audio signal 44 by a window function. That is, a window function that is zero-valued outside of a chosen temporal interval and symmetric around the middle of the interval. The non-zero temporal interval of the window function is translated by the frame rate over the duration of the audio signal 44. The window function can be a Hamming window function. However, any window function may alternatively be used that facilitates calculating signal features as described herein.

In each different position, the window 50 includes a different portion of the signal 44, which portion is processed, for example, by a feature extraction computer program to calculate signal features including, but not limited to, melsprectrum Fourier coefficients. Alternatively, any other type of coefficients representative of the audio signal can be used.

The feature extraction computer program uses, for example, a Fast Fourier Transform to calculate the coefficients. For each different window position, eighty (80) melspectrum Fourier coefficients are calculated. Alternatively, any number of coefficients may be calculated that facilitates creating a matrix from which embeddings may be extracted.

The calculated melspectrum Fourier coefficients constitute the dimensions of a single acoustic vector at a position of the window over the signal 44. The audio signal 44 is three seconds in duration, so the window 50 occupies three hundred (300) different positions. As a result, three hundred (300) acoustic vectors are created. The number of created acoustic vectors depends on the duration of the audio signal 44. Thus, for any captured audio signal 44, the number of created acoustic vectors may be more or less than three hundred (300). An m x n matrix may be created from the acoustic vectors, where "m" indicates the number of acoustic vectors and "n" indicates the dimension of each acoustic vector. For the example audio signal 44, the m x n matrix includes an acoustic vector for each window position, yielding a matrix having dimensions of m = 300 and n = 80. Additionally, the matrices may alternatively be the raw audio signal with or without any previous modifications.

Generally, a phrase spoken by a user can be referred to as an utterance. Example phrases include but are not limited to, "My voice is my password, verify me" and "I have several busy children, verify me." Alternatively, a phrase may be a single letter or number, a group of letters or numbers, any combination of letters and numbers, or one or more sentences. Any phrase may be spoken to generate the audio signal 44.

Meta data associated with the audio signal 44 includes, but is not limited to, the identity of the user who spoke the phrase to generate the signal 44 and an audio data production flag. An audio data production flag may be any information that represents the source that generated voice biometric data. Sources include, but are not limited to, a live person or a mechanism or device capable of recording and emitting sounds. When the source of voice biometric data is a live person the voice biometric data is considered genuine. Replays or other artificial reproductions of spoken phrases generated by mechanisms or device are considered fraudulent. Replays and artificial reproductions are typically associated with spoofing attacks. Thus, when the source of voice biometric data is a mechanism or device the voice biometric data is considered fraudulent.

The audio signal 44 includes voice biometric data of a user. Audio signals generated by different people speaking the same or different phrase include different voice biometric data. As a result, audio signals generated by different people speaking the same or different phrase are different. Because the audio signals contain biometric data about a user, matrices created from such signals are a function of voice biometric data.

Known UTD-SV systems for authenticating users based on voice biometric data typically capture audio data from a user, for example, signal 44 and create a feature matrix from the captured audio data. Generally, an activation sequence including elements is created from the feature matrix and a weight is calculated for each element. The activation sequence and weights may be calculated using a deep neural network (DNN). Alternatively, any software capable of calculating the activation sequences and weights may be used. The weights can be applied against the activation sequence to create a weighted activation sequence, the mean and covariance of the weighted activation sequence can be calculated, and the mean and covariance can be concatenated. The concatenated mean and covariances are typically used to create embeddings which can be used to calculate a loss while training a machine learning model or to calculate an authentication score during an authentication transaction.

A DNN different than the DNN used to calculate the activation sequence and the weights may be used to create the embeddings. However, known UTD-SV systems generally do not explicitly consider the temporal sequence of acoustic events, or phonemes, embedded within the secret passphrase chosen by the user.

UTD-SV systems that allow users to define their own secret passphrase use a Text Independent Automatic Speaker Verification (TI-ASV) system to authenticate the user's identity and an Automatic Speech Recognition (ASR) system to authenticate linguistic content embedded within the secret passphrase. Training and maintaining both the TD-ASV and ASR systems is time consuming and expensive. Additionally, authenticating linguistic content spoken in different languages requires training and maintaining a different ASR system for each different language which compounds training and maintenance time and costs.

To address these problems a method may be implemented that explicitly considers the temporal sequence of acoustic events, or phonemes, embedded within a user's secret passphrase that results in the identity of the user and the spoken passphrase being simultaneously validated. The method can include capturing, by an electronic device, audio data of a pass phrase spoken by a user and obtaining record audio data of the pass phrase spoken by the user. A first activation sequence can be created from the captured audio data and a second activation sequence can be created from the record audio data. The first activation sequence and the second activation sequence can be used to create a tensor. A first weighted activation sequence and a second weighted activation sequence can be calculated using the tensor, and an embedding can be calculated for the first weighted activation sequence and an embedding can be calculated for the second weighted activation sequence. A similarity score can be calculated between the calculated embeddings. In response to determining the similarity score satisfies a threshold score, the user and the pass phrase spoken by the user can be simultaneously successfully authenticated.

When a user desires to conduct an activity, the user may be required to prove his or her identity in an authentication transaction before being permitted to conduct the activity. Examples of activities include, but are not limited to, accessing an area within a commercial, residential or governmental building, or conducting a network-based transaction. Example network-based transactions include, but are not limited to, buying merchandise from a merchant service provider website and accessing top secret information from a computer system.

The electronic device 10 may prompt a user to speak his or her secret pass phrase. For example, the electronic device 10 may emit an audio prompt requesting the user to speak his or her secret pass phrase. Additionally, or alternatively, the electronic device 10 may display a message or otherwise prompt the user to speak the secret pass phrase. The electronic device 10 may also display a message or otherwise prompt the user to speak the pass phrase any number of times. The message may be any type of instruction that prompts the user to speak the secret pass phrase any number of times, for example, three. An example secret pass phrase may be "I like skiing with my kids" and an example message may instruct the user to speak the phrase three times. The spoken pass phrase is an utterance.

In response to the prompt, audio data of a user speaking his or her own secret pass phrase may be captured, for example, by the electronic device 10. Additionally, record audio data of the user speaking the same secret passphrase may be obtained from, for example, the memory 20 of the electronic device 10. The record audio data may have been spoken by the user during enrollment in the system 100.

The information shown in Figure 4 is similar to the information shown in Figure 3 as described in more detail below. As such, features illustrated in Figure 4 that are identical to features illustrated in Figure 3 are identified using the same reference numerals used in Figure 3.

Figure 4 is a diagram illustrating an example audio signal 42A captured by the electronic device 10 while a user spoke his or her secret passphrase during an authentication transaction. The secret pass phrase spoken by the user during authentication is the same as that spoken during enrolment to create the record audio data. However, the audio signal 42A extends from the origin 46 towards the terminus 48 and has a duration of about two-and-a-half (2.1) seconds. The duration of the signal 42A is shorter than that of the audio signal 42 so the signals 42 and 42A are different. The difference may result from the user speaking the pass phrase differently during enrollment in the system 100 versus during an authentication transaction. For example, the user may speak the secret passphrase slowly during enrolment and quickly during an authentication transaction.

Although the difference between the signals 42 and 42A is a difference in duration as described herein, it is contemplated by the present disclosure that the signals 42 and 42A may be different in other respects. For example, the signals 42 and 42A may have different amplitudes. Differences in amplitude may be caused by the user speaking the secret pass phrase loudly during enrolment and quietly during an authentication transaction and vice versa.

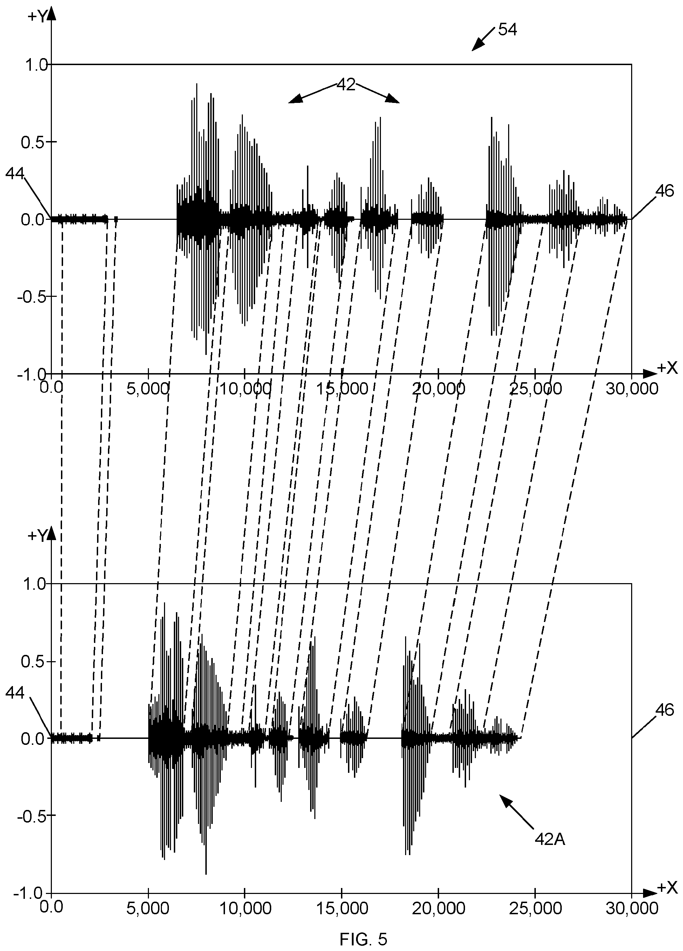

Figure 5 is a diagram 54 illustrating example corresponding utterance data between the signal 42 and the signal 42A.

Features can be extracted from the captured and the record audio data. The features extracted from the captured audio data can be used to create a feature matrix for the captured audio data and the features extracted from the record audio data can be used to create a feature matrix for the record audio data. The feature matrices may be processed by, for example, a Deep Neural Network (DNN) to create a first activation sequence from the feature matrix for the captured audio data and a second activation sequence from the feature matrix for the record audio data. Alternatively, the feature matrices may be processed by any type of software capable of creating activation sequences compatible with the methods for authenticating users as described herein. Each activation sequence includes vectors. Each vector in the first activation sequence has a corresponding vector in the second activation sequence.

The size of audio data files depends in part on how the secret pass phrase was spoken by the user. Users may speak their secret passphrase differently during enrolment and authentication for many different reasons. For example, as discussed above, users may speak the secret passphrase slowly during enrolment in the system 100 and quickly during an authentication transaction or loudly during enrolment and quietly during authentication. As a result, the audio data file for voice biometric data captured during enrollment can be larger than the audio data file for voice biometric data captured during an authentication transaction. Likewise, the activation sequence created from the enrollment data file should be larger than the activation sequence created from the authentication audio data file. However, it should be understood that when the duration or loudness of the audio signal captured during enrolment is less than the duration or loudness of the audio signal captured during authentication, the size of the audio data file created from the enrolment audio signal will be less than the size of the audio data file created from the authentication audio signal. As a result, the activation sequence created from the enrolment audio data file is less than the activation sequence created from the authentication audio data file.

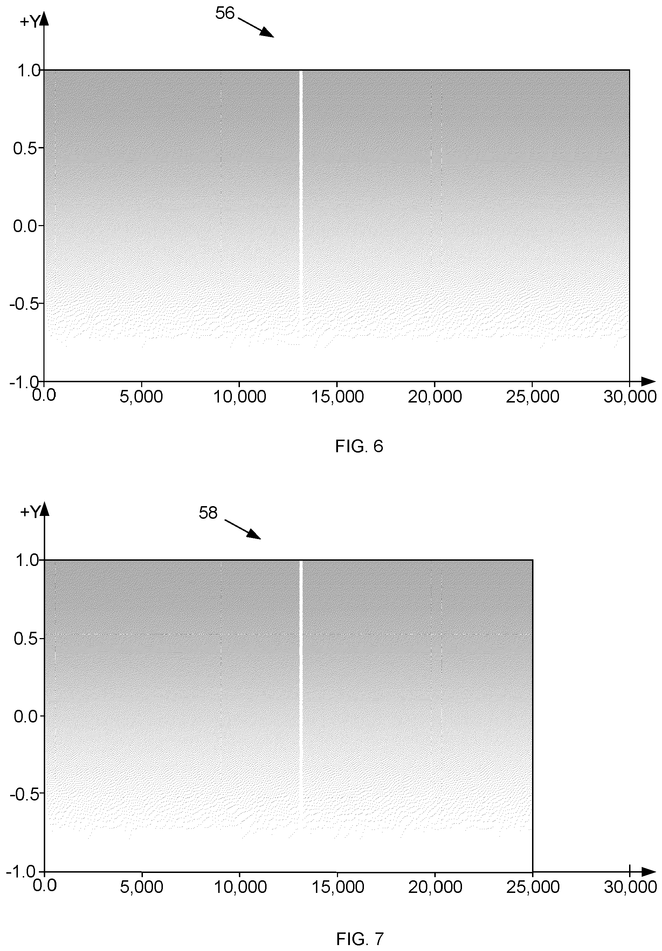

Figure 6 is a diagram 56 illustrating the first activation sequence. The activation sequence has a duration of about three (3) seconds because it was created from the audio signal 42.

Figure 7 is a diagram 58 illustrating the second activation sequence. The second activation sequence has a duration of about two-and-a-half (2.5) seconds because it was created from the audio signal 42A. Because the duration of the second activation sequence is shorter than the duration of the first activation sequence, the size of the audio data file for the second activation sequence is smaller than for the first sequence.

In view of the above, it should be understood that the first and second activation sequences may be different sizes. As a result, the first and second activation sequences cannot be used to create embeddings for use during authentication transactions. Instead, the activation sequences can be converted into a form that can be used for calculating embeddings.

The first and second activation sequences may be converted into a form for calculating embeddings by processing each of the sequences with a Dynamic Time Warping (DTW) algorithm. The DTW algorithm calculates the distance between each vector of the first activation sequence and each vector of the second activation sequence and creates a matrix from the distances. Alternatively, any other sequence alignment algorithm may be used that enables creating embeddings as described herein.

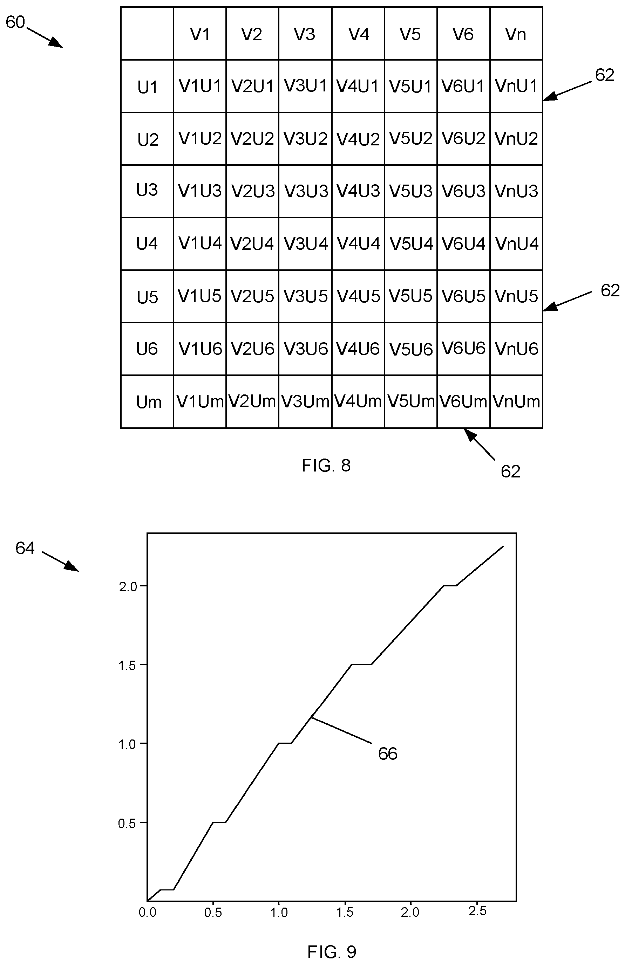

Figure 8 is a diagram illustrating an example matrix 60 that includes distances calculated between each vector of the first activation sequence and each vector of the second activation sequence. More specifically, the matrix 60 includes seven rows and seven columns. The vectors of the first activation sequence are listed in the first row and the vectors of the second activation matrix are listed in the first column. The vectors of the first activation sequence are designated V1 to Vn and the vectors of the second activation sequence are designated U1 to Um.

The total number of vectors (V) in the first activation sequence is "n." Thus, the designation "n" as used in conjunction with the vectors (V) indicates that any number "n" of vectors may be used that facilitates creating embeddings for use during authentication transactions. The total number of vectors (U) in the first activation sequence is "m." Thus, the designation "m" as used in conjunction with the vectors (U) indicates that any number "m" of vectors may be used that facilitates creating embeddings for use during authentication transactions. For the matrix 60 described herein, both "m" and "n" are seven.

The distances 62 between vectors is also provided. For example, the distance 62 between vector V1 and vector U2 is indicated as V1U2. As another example, the distance 62 between vector V4 and vector U6 is V4U6.

The sequence alignment algorithm can also calculate the minimum distance between each pair of corresponding vectors in the first and second activation sequences to define a path that represents the best match between the first and second activation sequences. Thus, for example, the sequence alignment algorithm can calculate the minimum distance between vectors V1 and U1, and V5 and U5.

Figure 9 is a diagram 64 illustrating a graph in which the distances 62 and the minimum distances between corresponding vectors in the first and second sequences are plotted. The vertical axis represents the second activation sequence and the horizontal axis represents the first activation sequence. The plotting of the minimum distances forms a path 66 that represents the best match between the first and second activation sequences.

Vectors along the path are used to create sub-activation sequences. Vectors along the path associated with the first activation sequence are used to create a first sub-activation sequence and vectors along the path associated with the second activation sequence are used to create a second sub-activation sequence. Thus, the first sub-activation sequence includes a subset of vectors from the first activation sequence that define the minimum distance from the second activation sequence. Similarly, the second sub-activation sequence includes a subset of vectors from the second activation sequence that define the minimum distance from the first activation sequence. The first and second sub-activation sequences have the same number of vectors so can be used to create a tensor. It is contemplated by the present disclosure that the tensor enables creating embeddings that in turn facilitate calculating the most accurate authentication transaction results because the tensor is based on the minimum distances calculated between the first and second activation sequences.

A unique weight vector may be calculated from the tensor and used to calculate a first weighted activation sequence from the first activation sequence. A second weighted activation sequence may be calculated using the unique weighted vector and the second activation sequence. Alternatively, a first weight vector and a second weight vector may be calculated. When first and second weight vectors are calculated, the first weight vector can be calculated using the tensor and the first activation sequence and the second weighted vector can be calculated using the tensor and the second activation sequence.

The unique weight vector, the first weight vector, the second weight vector, and the weighted activation sequences may be created by a deep neural network (DNN) run by, for example, the electronic device 10. The mean and covariance of the first weighted activation sequence and of the second weighted activation sequence may be calculated by the electronic device 10. The mean and covariance of the first weighted activation sequence may be concatenated, and the mean and covariance of the second weighted activation sequence may be concatenated. The electronic device 10 may calculate an embedding for the first weighted activation sequence by concatenating the concatenated mean and covariance of the first weighted activation sequence. Likewise, the electronic device 10 may calculate an embedding for the second weighted activation sequence by concatenating the concatenated mean and covariance of the second weighted activation sequence.

The embeddings may be used to authenticate the identity of the user. More specifically, a similarity score may be computed between the embeddings calculated for the first and second activation sequences. If the similarity score satisfies a threshold score, then the user and the secret pass phrase spoken by the user are simultaneously successfully authenticated. As a result, the user is permitted to conduct the desired transaction. If the similarity score is not satisfied, the user is not successfully authenticated and the secret pass phrase is not successfully authenticated.

The threshold may be satisfied, for example, when the similarity score is less than or equal to the threshold value or is equal to or greater than the threshold quality feature value.

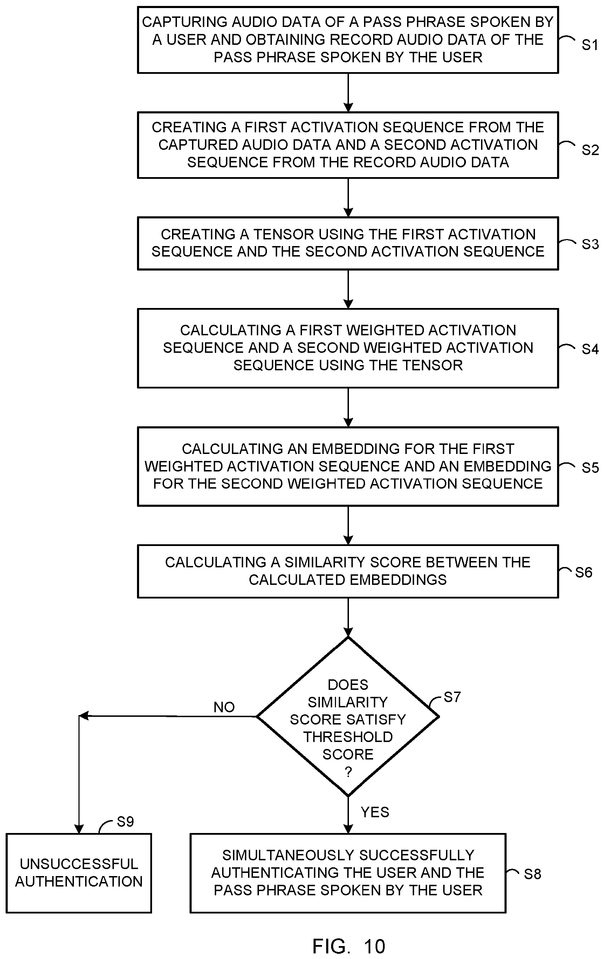

Figure 10 is a flowchart illustrating an example method and algorithm for authenticating users. Figure 10 illustrates example operations performed when the electronic device 10 runs software 40 stored in the memory 20 to authenticate a user. A user may cause the electronic device 10 to run the software 40 or the electronic device 10 may automatically run the software 40.

The method starts in step S1, in which the software 40 executed by the processor 18 causes the electronic device 10 to capture audio data of a pass phrase spoken by the user. The pass phrase may be the secrete pass phrase of the user. The audio data is voice biometric data in the form of an audio signal, for example, audio signal 42A. The electronic device 10 also obtains record audio data of the same pass phrase spoken by the user from, for example, the memory 20. The record audio data may have been captured, for example, when the user enrolled in the system 100. The captured and record audio data include features.

In step S2, the software 40 executed by the processor 18 causes the electronic device 10 to create a first activation sequence from the captured audio data and a second activation sequence from the record audio data. More specifically, features are extracted from the captured and the record audio data and are used to create feature matrices. The features extracted from the captured audio data can be used to create a feature matrix for the captured audio data and the features extracted from the record audio data can be used to create a feature matrix for the record audio data. The feature matrices may be processed by, for example, a Deep Neural Network (DNN) to create a first activation sequence from the feature matric for the captured audio data and a second activation sequence from the feature matrix for the record audio data. Alternatively, the feature matrices may be processed by any type of software capable of creating activation sequences compatible with the methods for authenticating users as described herein. Each activation sequence includes vectors. Each vector in the first activation sequence has a corresponding vector in the second activation sequence.

Next, in step S3, the software 40 executed by the processor 18 causes the electronic device 10 to create a tensor using the first activation sequence and the second activation sequence. More specifically, the activation sequences are compared against each other using a sequence alignment algorithm, for example, a Dynamic Time Warping (DTW) algorithm. Alternatively, any other sequence alignment algorithm may be used that enables creating embeddings as described herein. The sequence alignment algorithm calculates the minimum distance between each pair of corresponding vectors in the first and second activation sequences to define a path that represents the best match between the first and second activation sequences. Once aligned, the two activation sequences have the same dimension and can be stacked into a tensor.

Vectors along the path are used to create a new activation sequence, AS2-seq, from the second activation sequence. Each vector along the first activation sequence is associated with one of many vectors along the second activation sequence. The association between each vector integrates sequential constraints that ensure vectors from both activation sequences are sequentially associated. It allows the creation of the new activation sequence AS2-seq that contains vectors from the second activation sequence aligned with the first activation sequence. Thus, AS2-seq includes a subset of vectors from the second activation sequence that define the minimum distance from the first activation sequence. The first activation sequence and ASV-sequence have the same number of vectors so can be used to create a tensor.

Next, in step S4, the software 40 executed by the processor 18 causes the electronic device 10 to calculate a first weighted activation sequence and a second weighted activation sequence using the tensor.

In step S5, the software 40 executed by the processor 18 causes the electronic device 10 to calculate an embedding for the first weighted activation sequence and an embedding for the second weighted activation sequence. More specifically, the mean and covariance of the first weighted activation sequence and of the second weighted activation sequence may be calculated by the electronic device 10. The mean and covariance of the first weighted activation sequence may be concatenated, and the mean and covariance of the second weighted activation sequence may be concatenated. The electronic device 10 may calculate an embedding for the first weighted activation sequence by concatenating the concatenated mean and covariance of the first weighted activation sequence. Likewise, the electronic device 10 may calculate an embedding for the second weighted activation sequence by concatenating the concatenated mean and covariance of the second weighted activation sequence.

Next, in step S6, the software 40 executed by the processor 18 causes the electronic device 10 to calculate a similarity score between the calculated embeddings. In step S7, the software 40 executed by the processor 18 causes the electronic device 10 to compare the similarity score against a threshold score. If the similarity score satisfies the threshold score, in step S8, the user and the pass phrase spoken by the user are simultaneously successfully authenticated. Otherwise, if the similarity score is not satisfied, in step S9, neither the user nor the secret pass phrase is successfully authenticated.

The threshold score may be satisfied, for example, when the similarity score is less than or equal to the threshold value or is equal to or greater than the threshold quality feature value.

Using the method and algorithm for authenticating users enables simultaneously successfully authenticating the identity of a user and authenticating the secret pass phrase spoken by the user during an authentication transaction. As a result, the method and algorithm for conducting authentication transactions facilitates reducing the time and costs of generating accurate and trustworthy authentication transaction results based on voice biometric data and enhances the accuracy of the results.

The example methods and algorithms described herein may be conducted entirely by the electronic device 10, partly by the electronic device 10 and partly by the server 12 via the network 16, or partly by the electronic device 10 and the computer 14 via the network 16. Additionally, the methods and algorithms described herein may be conducted partly by the electronic device 10, partly by the server 12 and partly by the computer 14 via the network 16. Moreover, the example methods described herein may be conducted entirely on other computer systems (not shown) and/or other electronic devices 10 (not shown). It is contemplated by the present disclosure that the example methods and algorithms described herein may be conducted using any combination of computers, computer systems, and computing devices (not shown). Furthermore, data described herein as being stored in the electronic device 10 may alternatively, or additionally, be stored in the server 12, the computer 14, or in any computer system (not shown) or electronic device (not shown) operable to communicate with the electronic device 10 over the network 16.

Additionally, the example methods and algorithms described herein may be implemented with any number and organization of computer program components. Thus, the methods and algorithms described herein are not limited to specific computer-executable instructions. Alternative example methods and algorithms may include different computer-executable instructions or components having more or less functionality than described herein.

The example methods and/or algorithms described above should not be considered to imply a fixed order for performing the method and/or algorithm steps. Rather, the method and/or algorithm steps may be performed in any order that is practicable, including simultaneous performance of at least some steps. Moreover, the method and/or algorithm steps may be performed in real time or in near real time. It should be understood that, for any method and/or algorithm described herein, there can be additional, fewer, or alternative steps performed in similar or alternative orders, or in parallel, within the scope of the various embodiments, unless otherwise stated. Furthermore, the invention is not limited to the embodiments of the methods and/or algorithms described above in detail.

## Claims

1. A method for authenticating users comprising the steps of:
capturing, by an electronic device (10), audio data (44, 42A) of a pass phrase spoken by a user (S1);
obtaining record audio data (42) of the pass phrase spoken by the user (S1);
creating a first activation sequence (56) from the captured audio data and a second activation sequence (58) from the record audio data;
aligning the first activation sequence (56) and the second activation sequence (58) (S3) and wherein, once aligned, the first activation sequence and the second activation sequence have the same dimension and are stacked into a tensor;
calculating a first weighted activation sequence and a second weighted activation sequence using the tensor (S4);
calculating an embedding for the first weighted activation sequence and an embedding for the second weighted activation sequence (S5);
calculating a similarity score between the calculated embeddings (S6); and
in response to determining the similarity score satisfies a threshold score, simultaneously successfully authenticating the user and the pass phrase spoken by the user (S8).

2. The method according to claim 1, wherein said step of creating a first activation sequence and a second activation sequence comprises the steps of:
extracting features from the first and the record audio data (S2);
creating a first feature matrix using the features extracted from the first captured audio data and a second feature matrix using the features extracted from the record audio data (S2); and
creating the first activation sequence from the first feature matrix and the second activation sequence from the second feature matrix (S2).

3. The method according to claim 1 or 2, wherein said step of creating a tensor (S3) comprises:
comparing the first activation sequence (56) against the second activation sequence (58) to determine a path (66) that associates each vector from the first activation sequence to one or many vectors from the second activation sequence, wherein the path (66) has a minimum distance between the activation sequences and insures both activation sequences are processed sequentially, and wherein the tensor is created from sub-activation sequences formed based on said path (66).

4. The method according to claim 1, wherein said step of calculating an embedding for the first weighted activation sequence and an embedding for the second weighted activation sequence (S5) comprises the steps of:
calculating a unique weight vector from the tensor;
calculating a first weighted activation sequence from the first activation sequence using the unique weight vector and a second weighted activation sequence from the second activation sequence using the unique weight vector;
calculating the mean and covariance of the first and second weighted activation sequences;
concatenating the mean and covariance of the first weighted activation sequence and of the second weighted activation sequence;
concatenating the concatenated mean and covariance of the first weighted activation sequence to calculate the embedding for the first weighted activation sequence; and
concatenating the concatenated mean and covariance of the second weighted activation sequence to calculate the embedding for the second weighted activation sequence.

5. The method according to claim 1, wherein said step of calculating an embedding for the first weighted activation sequence and an embedding for the second weighted activation sequence (S5) comprises the steps of:
calculating a first weight vector from the tensor and the first activation sequence;
calculating a second weight vector from the tensor and the second activation sequence;
calculating a first weighted activation sequence from the first activation sequence and the first weight vector;
calculating a second weighted activation sequence from the second activation sequence and the second weight vector;
calculating the mean and covariance of the first and second weighted activation sequences;
concatenating the mean and covariance of the first weighted activation sequence and of the second weighted activation sequence;
concatenating the concatenated mean and covariance of the first weighted activation sequence to calculate the embedding for the first weighted activation sequence; and
concatenating the concatenated mean and covariance of the second weighted activation sequence to calculate the embedding for the second weighted activation sequence.

6. An electronic device (10) for authenticating users comprising:
a processor (18); and
a memory (20) configured to store data, said electronic device being associated with a network and said memory being in communication with said processor and having instructions stored thereon which, when read and executed by said processor, cause said electronic device (10) to carry out the method of any preceding claim.

7. A computer program which when executed by a hardware processor (18) of an electronic device (10) causes the device to carry out the method of any one of claims 1 to 5.

## Patentansprüche

1. Ein Verfahren zum Authentifizieren von Benutzern, das die folgenden Schritte beinhaltet:
Erfassen, durch eine elektronische Vorrichtung (10), von Audiodaten (44, 42A) einer Passphrase, die von einem Benutzer gesprochen wird (S1);
Erhalten von Aufzeichnungsaudiodaten (42) der Passphrase, die von dem Benutzer gesprochen wird (S1);
Erzeugen einer ersten Aktivierungssequenz (56) aus den erfassten Audiodaten und einer zweiten Aktivierungssequenz (58) aus den Aufzeichnungsaudiodaten;
Ausrichten der ersten Aktivierungssequenz (56) und der zweiten Aktivierungssequenz (58) (S3) und wobei, sobald sie ausgerichtet sind, die erste Aktivierungssequenz und die zweite Aktivierungssequenz die gleiche Dimension aufweisen und zu einem Tensor gestapelt sind;
Berechnen einer ersten gewichteten Aktivierungssequenz und einer zweiten gewichteten Aktivierungssequenz unter Verwendung des Tensors (S4);
Berechnen einer Einbettung für die erste gewichtete Aktivierungssequenz und einer Einbettung für die zweite gewichtete Aktivierungssequenz (S5);
Berechnen einer Ähnlichkeitsbewertung zwischen den berechneten Einbettungen (S6); und
als Reaktion auf das Bestimmen, dass die Ähnlichkeitsbewertung eine Schwellenbewertung erfüllt, gleichzeitiges erfolgreiches Authentifizieren des Benutzers und der Passphrase, die von dem Benutzer gesprochen wird (S8).

2. Verfahren gemäß Anspruch 1, wobei der Schritt des Erzeugens einer ersten Aktivierungssequenz und einer zweiten Aktivierungssequenz die folgenden Schritte beinhaltet:
Extrahieren von Merkmalen aus den ersten und den Aufzeichnungsaudiodaten (S2);
Erzeugen einer ersten Merkmalsmatrix unter Verwendung der Merkmale, die aus den ersten erfassten Audiodaten extrahiert werden, und einer zweiten Merkmalsmatrix unter Verwendung der Merkmale, die aus den Aufzeichnungsaudiodaten extrahiert werden (S2); und
Erzeugen der ersten Aktivierungssequenz aus der ersten Merkmalsmatrix und der zweiten Aktivierungssequenz aus der zweiten Merkmalsmatrix (S2).

3. Verfahren gemäß Anspruch 1 oder 2, wobei der Schritt des Erzeugens eines Tensors (S3) Folgendes beinhaltet:
Vergleichen der ersten Aktivierungssequenz (56) mit der zweiten Aktivierungssequenz (58), um einen Pfad (66) zu bestimmen, der jeden Vektor aus der ersten Aktivierungssequenz mit einem oder vielen Vektoren aus der zweiten Aktivierungssequenz assoziiert, wobei der Pfad (66) einen Mindestabstand zwischen den Aktivierungssequenzen aufweist und sicherstellt, dass beide Aktivierungssequenzen sequentiell verarbeitet werden, und wobei der Tensor aus Subaktivierungssequenzen erzeugt wird, die basierend auf dem Pfad (66) gebildet werden.

4. Verfahren gemäß Anspruch 1, wobei der Schritt des Berechnens einer Einbettung für die erste gewichtete Aktivierungssequenz und einer Einbettung für die zweite gewichtete Aktivierungssequenz (S5) die folgenden Schritte beinhaltet:
Berechnen eines eindeutigen Gewichtsvektors aus dem Tensor;
Berechnen einer ersten gewichteten Aktivierungssequenz aus der ersten Aktivierungssequenz unter Verwendung des eindeutigen Gewichtsvektors und einer zweiten gewichteten Aktivierungssequenz aus der zweiten Aktivierungssequenz unter Verwendung des eindeutigen Gewichtsvektors;
Berechnen des Mittelwerts und der Kovarianz von der ersten und zweiten gewichteten Aktivierungssequenz;
Verketten des Mittelwerts und der Kovarianz von der ersten gewichteten Aktivierungssequenz und der zweiten gewichteten Aktivierungssequenz;
Verketten des verketteten Mittelwerts und der verketteten Kovarianz von der ersten gewichteten Aktivierungssequenz, um die Einbettung für die erste gewichtete Aktivierungssequenz zu berechnen; und
Verketten des verketteten Mittelwerts und der verketteten Kovarianz von der zweiten gewichteten Aktivierungssequenz, um die Einbettung für die zweite gewichtete Aktivierungssequenz zu berechnen.

5. Verfahren gemäß Anspruch 1, wobei der Schritt des Berechnens einer Einbettung für die erste gewichtete Aktivierungssequenz und einer Einbettung für die zweite gewichtete Aktivierungssequenz (S5) die folgenden Schritte beinhaltet:
Berechnen eines ersten Gewichtsvektors aus dem Tensor und der ersten Aktivierungssequenz;
Berechnen eines zweiten Gewichtsvektors aus dem Tensor und der zweiten Aktivierungssequenz;
Berechnen einer ersten gewichteten Aktivierungssequenz aus der ersten Aktivierungssequenz und dem ersten Gewichtsvektor;
Berechnen einer zweiten gewichteten Aktivierungssequenz aus der zweiten Aktivierungssequenz und dem zweiten Gewichtsvektor;
Berechnen des Mittelwerts und der Kovarianz der ersten und zweiten gewichteten Aktivierungssequenzen;
Verketten des Mittelwerts und der Kovarianz von der ersten gewichteten Aktivierungssequenz und der zweiten gewichteten Aktivierungssequenz;
Verketten des verketteten Mittelwerts und der verketteten Kovarianz der ersten gewichteten Aktivierungssequenz, um die Einbettung für die erste gewichtete Aktivierungssequenz zu berechnen; und
Verketten des verketteten Mittelwerts und der verketteten Kovarianz von der zweiten gewichteten Aktivierungssequenz, um die Einbettung für die zweite gewichtete Aktivierungssequenz zu berechnen.

6. Eine elektronische Vorrichtung (10) zum Authentifizieren von Benutzern, die Folgendes beinhaltet:
einen Prozessor (18); und
einen Speicher (20), der konfiguriert ist, um Daten zu speichern, wobei die elektronische Vorrichtung mit einem Netzwerk assoziiert ist und der Speicher in Kommunikation mit dem Prozessor steht und darauf gespeicherte Anweisungen aufweist, die, wenn sie von dem Prozessor gelesen und ausgeführt werden, die elektronische Vorrichtung (10) veranlassen, das Verfahren nach einem der vorhergehenden Ansprüche durchzuführen.

7. Ein Computerprogramm, das, wenn es von einem Hardwareprozessor (18) einer elektronischen Vorrichtung (10) ausgeführt wird, die Vorrichtung veranlasst, das Verfahren gemäß einem der Ansprüche 1 bis 5 durchzuführen.

## Revendications

1. Un procédé pour l'authentification d'utilisateurs comprenant les étapes :
de capture, par un dispositif électronique (10), de données audio (44, 42A) d'une phrase de passe prononcée par un utilisateur (S1) ;
d'obtention de données audio d'enregistrement (42) de la phrase de passe prononcée par l'utilisateur (S1) ;
de création d'une première séquence d'activation (56) à partir des données audio capturées et d'une deuxième séquence d'activation (58) à partir des données audio d'enregistrement ;
d'alignement de la première séquence d'activation (56) et de la deuxième séquence d'activation (58) (S3) et où, une fois alignées, la première séquence d'activation et la deuxième séquence d'activation ont la même dimension et sont empilées en un tenseur ;
de calcul d'une première séquence d'activation pondérée et d'une deuxième séquence d'activation pondérée en utilisant le tenseur (S4) ;
de calcul d'un plongement pour la première séquence d'activation pondérée et d'un plongement pour la deuxième séquence d'activation pondérée (S5) ;
de calcul d'un score de similarité entre les plongements calculés (S6) ; et
en réponse à la détermination que le score de similarité satisfait à un score seuil, d'authentification simultanée avec succès de l'utilisateur et de la phrase de passe prononcée par l'utilisateur (S8).

2. Le procédé selon la revendication 1, où ladite étape de création d'une première séquence d'activation et d'une deuxième séquence d'activation comprend les étapes :
d'extraction de caractéristiques à partir des premières et des données audio d'enregistrement (S2) ;
de création d'une première matrice de caractéristiques en utilisant les caractéristiques extraites à partir des premières données audio capturées et d'une deuxième matrice de caractéristiques en utilisant les caractéristiques extraites à partir des données audio d'enregistrement (S2) ; et
de création de la première séquence d'activation à partir de la première matrice de caractéristiques et de la deuxième séquence d'activation à partir de la deuxième matrice de caractéristiques (S2).

3. Le procédé selon la revendication 1 ou la revendication 2, où ladite étape de création d'un tenseur (S3) comprend :
la comparaison de la première séquence d'activation (56) à la deuxième séquence d'activation (58) afin de déterminer un chemin (66) qui associe chaque vecteur de la première séquence d'activation à un ou plusieurs vecteurs de la deuxième séquence d'activation, où le chemin (66) a une distance minimale entre les séquences d'activation et assure que les deux séquences d'activation sont traitées séquentiellement, et où le tenseur est créé à partir de sous-séquences d'activation formées sur la base dudit chemin (66).

4. Le procédé selon la revendication 1, où ladite étape de calcul d'un plongement pour la première séquence d'activation pondérée et d'un plongement pour la deuxième séquence d'activation pondérée (S5) comprend les étapes :
de calcul d'un vecteur de poids unique à partir du tenseur ;
de calcul d'une première séquence d'activation pondérée à partir de la première séquence d'activation en utilisant le vecteur de poids unique et d'une deuxième séquence d'activation pondérée à partir de la deuxième séquence d'activation en utilisant le vecteur de poids unique ;
de calcul de la moyenne et de la covariance des première et deuxième séquences d'activation pondérées ;
de concaténation de la moyenne et de la covariance de la première séquence d'activation pondérée et de la deuxième séquence d'activation pondérée ;
de concaténation de la moyenne et de la covariance concaténées de la première séquence d'activation pondérée afin de calculer le plongement pour la première séquence d'activation pondérée ; et
de concaténation de la moyenne et de la covariance concaténées de la deuxième séquence d'activation pondérée afin de calculer le plongement pour la deuxième séquence d'activation pondérée.

5. Le procédé selon la revendication 1, où ladite étape de calcul d'un plongement pour la première séquence d'activation pondérée et d'un plongement pour la deuxième séquence d'activation pondérée (S5) comprend les étapes :
de calcul d'un premier vecteur de poids à partir du tenseur et de la première séquence d'activation ;
de calcul d'un deuxième vecteur de poids à partir du tenseur et de la deuxième séquence d'activation ;
de calcul d'une première séquence d'activation pondérée à partir de la première séquence d'activation et du premier vecteur de poids ;
de calcul d'une deuxième séquence d'activation pondérée à partir de la deuxième séquence d'activation et du deuxième vecteur de poids ;
de calcul de la moyenne et de la covariance des première et deuxième séquences d'activation pondérées ;
de concaténation de la moyenne et de la covariance de la première séquence d'activation pondérée et de la deuxième séquence d'activation pondérée ;
de concaténation de la moyenne et de la covariance concaténées de la première séquence d'activation pondérée afin de calculer le plongement pour la première séquence d'activation pondérée ; et
de concaténation de la moyenne et de la covariance concaténées de la deuxième séquence d'activation pondérée afin de calculer le plongement pour la deuxième séquence d'activation pondérée.

6. Un dispositif électronique (10) pour l'authentification d'utilisateurs comprenant :
un processeur (18) ; et
une mémoire (20) configurée pour stocker des données, ledit dispositif électronique étant associé à un réseau et ladite mémoire étant en communication avec ledit processeur et ayant des instructions stockées sur celle-ci qui, lorsqu'elles sont lues et exécutées par ledit processeur, amènent ledit dispositif électronique (10) à mettre en œuvre le procédé de n'importe quelle revendication précédente.

7. Un programme informatique qui, lorsqu'il est exécuté par un processeur matériel (18) d'un dispositif électronique (10), amène le dispositif à mettre en oeuvre le procédé de l'une quelconque des revendications 1 à 5.
